(19) Europäisches Patentamt
European Patent Office
Office européen des brevets

(11) **EP 0 805 344 A2**

## (12) EUROPÄISCHE PATENTANMELDUNG

(43) Veröffentlichungstag:
05.11.1997 **Patentblatt 1997/45**

(51) Int. Cl.⁶: **G01M 3/32**

(21) Anmeldenummer: **97106687.3**

(22) Anmeldetag: **23.04.1997**

(84) Benannte Vertragsstaaten:
**CH DE LI NL SE**

(30) Priorität: **01.05.1996 CH 1103/96**

(71) Anmelder: **ELPATRONIC AG**
**CH-6303 Zug (CH)**

(72) Erfinder: **Ubezio, Stefan**
**8048 Zürich (CH)**

(54) **Vorrichtung zur Erkennung von Lecks bei Behältern**

(57) An einer Karussellfördereinrichtung (1) für Behälter (11, 12) ist ein Kopf (4) mit einem feststehenden Element (5) und einem mit dem Karussell drehenden Element (6) angeordnet. An dem feststehenden Element ist eine Saugpumpe (18) und sind zwei Drucksensoren (21, 22) angeschlossen. An das drehende Element (6) sind die Behälter luftdicht ankoppelbar. Durch die Relativbewegung der Elemente werden die Behälter nacheinander zunächst mit der Saugpumpe verbunden und teilweise evakuiert und nachfolgend mit den Drucksensoren verbunden. Durch Auswertung der Druckmesswerte kann ermittelt werden, ob der Behälter ein Leck aufweist. Die Vorrichtung arbeitet genau bei hoher Kadenz und benötigt nur geringen mechanischen Aufbau.

Fig. 1

## Beschreibung

Die Erfindung betrifft eine Vorrichtung zur Erkennung von Lecks bei Behältern.

Es ist bekannt, Behälter, die auf einer Förderanlage gefördert werden, auf das Vorhandensein von Lecks zu überprüfen. Die Behälter können z.B. Flaschen sein, insbesondere Kunststoff-Flaschen. Die Leckerkennung soll bei dieser Anwendung auch kleine Lecks bei grosser Flaschenfördergeschwindigkeit erkennen können. Von den Kunststoffflaschenherstellern wird z.B. für Einwegflaschen das Erkennen einer 0,3 mm tiefen Kerbe in der Mündungsfläche der Flasche bei einer Förderkadenz von 200 Flaschen pro Minute (BPM) verlangt. Von den Abfüllern wird z.B. das Erkennen eines Loches von 0,2 mm Durchmesser in der Flaschenwand von Mehrweg-Flaschen bei 600 BPM verlangt.

Bisherige Vorrichtungen zur Leckerkennung bzw. Leckmessung sind aufwendig. Aus der Inspektionstechnik ist ein Verteilkopf für aus Flaschen entnommene Gasproben bekannt. EP-A-0 579 952 zeigt einen solchen Verteilkopf mit einem mit einer Karussellfördereinrichtung mitdrehendem Element und einem feststehenden Element zur Verteilung von Gasproben auf ein Massenspektrometer. Der Verteilkopf ist ein mechanisch einfaches und zuverlässiges Bauteil.

Der Erfindung liegt die Aufgabe zugrunde, eine Vorrichtung zur Leckerkennung zu schaffen, welche bei einfachem, kostengünstigen Aufbau wenig bewegliche Teile aufweist, die einfache Einstellung und Wartung ermöglicht und eine sichere Leckerkennung bei hohem Behälterdurchsatz ermöglicht.

Diese Aufgaben werden durch die kennzeichnenden Merkmale des Anspruchs 1 gelöst.

Es hat sich gezeigt, dass ein Kopf mit feststehendem und drehendem Teil eine ausgezeichnete Dichtigkeit aufweisen kann, was eine Leckerkennung mit einem solchen Kopf ermöglicht. Dieser erlaubt weiter die die einfache Verbindung einer elektronischen Auswertschaltung mit dem feststehenden Teil und erfordert nur wenig bewegliche Komponenten.

Im folgenden werden Ausführungsbeispiele der Erfindung anhand der Zeichnungen näher erläutert. Dabei zeigt

Figur 1 grob schematisch eine Ansicht einer Vorrichtung zur prinzipiellen Erläuterung von deren Funktion;
Figur 2 eine schematische Vertikalschnittansicht eines Kopfes zur Leckerkennung; und
Figur 3 eine Draufsicht auf den Kopf von Figur 2.

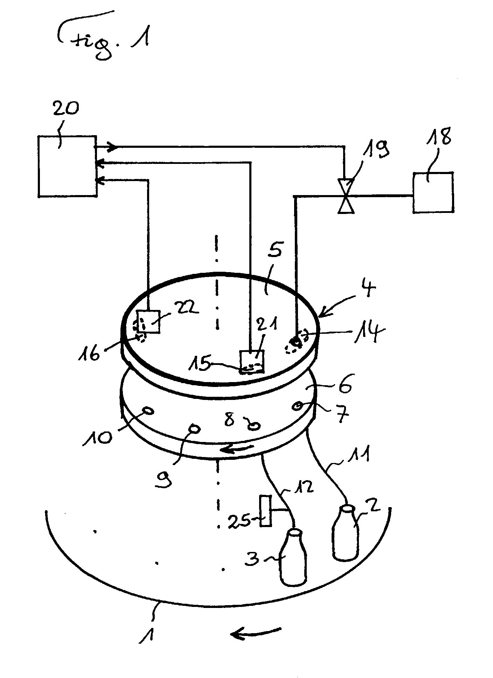

In Figur 1 ist eine Karussellfördereinrichtung für Flaschen grob schematisch dargestellt, wobei das eigentliche Karussell 1 nur mit einer Linie angedeutet ist. Karussellförderer sind wohl bekannt und z.B. in der EP-A-0 579 952 näher dargestellt und müssen daher hier nicht näher erläutert werden. Im Karussell 1 sind in der Zeichnung nur zwei Flaschen 2, 3 dargestellt; natürlich sind in Wirklichkeit auch die anderen Karussellpositionen mit zu fördernden Behältern, bzw. Flaschen, besetzt. In der Drehachse des Karussells, vorzugsweise oberhalb desselben, ist nun ein Kopf 4 angeordnet, der eine mit dem Karussell 1 mitdrehende Scheibe 6 und eine feststehende Scheibe 5 aufweist. In der Figur 1 sind die Scheiben zur besseren Darstellung voneinander entfernt dargestellt; in Wirklichkeit liegen die Scheiben aneinander an und gleiten bei der Drehung der unteren Scheibe 6 aufeinander. Es ergibt sich grundsätzlich eine Anordnung wie aus EP-A-0 579 952 bekannt. In der unteren, drehenden Scheibe 6 sind, vorzugsweise runde, Ausnehmungen 7, 8, 9 usw. angeordnet. Die Zahl der Ausnehmungen entspricht der Anzahl Karussellpositionen. Von der Unterseite der Scheibe 6 führt jeweils eine Leitung 11, 12 usw. von der jeweiligen Ausnehmung zum Behälter. Durch einen nur schematisch dargestellten Mechanismus 25 wird das Ende der Leitung luftdicht an den Behälter angekoppelt bzw. nach der Messung abgekoppelt. Bei Flaschen können die Leitungen z.B. mittels einer Gummidichtung an die Mündung der Flaschen angesetzt und dort angepresst werden. Es ist dabei ein Hebe- und Absenkmechanismus verwendbar, wie er aus EP-A-0 579 952 bekannt ist, weshalb hier keine nähere Beschreibung dieses Mechanismus notwendig ist. Das Heben- und Absenken bzw. das Ansetzen und Wegnehmen des Schlauches von der Flasche erfolgt dabei synchron mit der Karussellbewegung, d.h. an die in das Karussell eintretenden Flaschen werden die Leitungen angesetzt, von den austretenden Flaschen werden sie weggenommen.

Die obere, feststehende Scheibe 5 weist drei Ausnehmungen auf, welche vorzugsweise schlitzförmig sind bzw. eine kreisringabschnittsförmige Gestalt aufweisen. Die Ausnehmungen sind so angeordnet, dass sie mit den Ausnehmungen 7, 8, 9 usw. der unteren Scheibe kommunizieren, wenn diese Ausnehmungen bei ihrer Drehbewegung in der Bereich der Ausnehmungen der oberen Scheibe 5 gelangen. An einer ersten Ausnehmung 14 der oberen Scheibe ist eine Vakuumpumpe 18 angeschlossen, vorzugsweise über ein Ventil 19, welches von einer Steuer- und Auswertschaltung 20 ein- und ausschaltbar ist, also z.B. in der Form eines elektrisch steuerbaren Ventils. An einer zweiten Ausnehmung 15 der oberen Scheibe 5 ist ein erster Drucksensor 21 angeordnet. Vorzugsweise erstreckt sich dabei der Drucksensor 21 in die Ausnehmung 15 der Scheibe hinein. An einer dritten Ausnehmung 16 der Scheibe 5 ist ein zweiter Drucksensor 22 angeordnet, welcher ebenfalls vorzugsweise in die Ausnehmung hineinragt und zwar auf identische Weise wie der erste Drucksensor. Die beiden Drucksensoren, welche z.B. ein dem Druck proportionales elektrisches Signal abgeben, sind an eine Auswertschaltung angeschlossen, in Figur 1 z.B. an die kombinierte Steuer- und Auswerteinrichtung 20, welche z.B. ein digitaler Rechner sein kann.

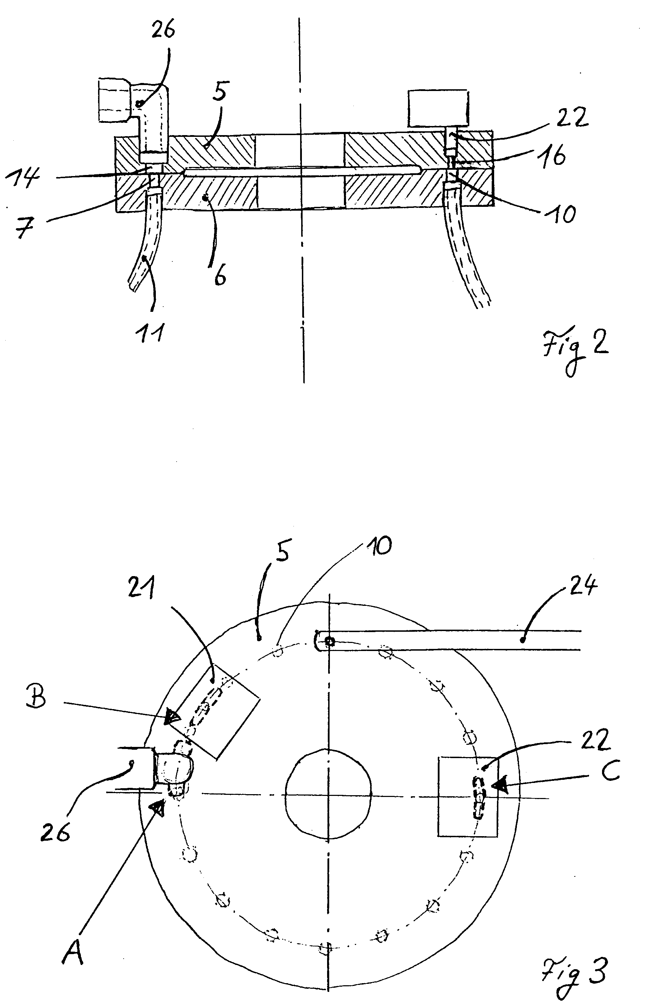

Die Figuren 2 und 3 zeigen den Kopf in schematischer Darstellung, wobei gleiche Bezugsziffern wie bisher verwendet gleiche Elemente bezeichnen. In Figur 2 ist ersichtlich, wie die Scheiben 5 und 6 im Bereich der Ausnehmungen aufeinander gleiten. Ferner ist ersichtlich, wie die Leitung 11 an der Ausnehmung 7 der Scheibe 6 befestigt ist, bzw. eine Leitung bei der Ausnehmung 10 befestigt ist, und wie der Drucksensor 22 in die Ausnehmung 16 der Scheibe 5 hineinragt. Ferner ist der Anschluss 26 für die Leitung zum Ventil 19 bzw. zur Pumpe 18 ersichtlich. In Figur 3 ist ferner eine Halterung 24 ersichtlich, welche die obere Scheibe 5 gegen Drehung gesichert hält.

Im folgenden wird die Funktion der Vorrichtung erläutert. Dabei werden drei Positionen A, B und C unterschieden. Position A bedeutet, dass eine der Ausnehmungen in der drehenden Scheibe 6 in den Bereich der Ansaugausnehmung 14 der oberen Scheibe 5 gelangt ist, bzw. dass die mit der Ausnehmung in Verbindung stehende Flasche mit der Saugpumpe in Verbindung steht. Position B bedeutet, dass die Ausnehmung in der unteren Scheibe die erste Messausnehmung 15 in der oberen Scheibe 5 erreicht hat, bzw. dass die Flasche mit dem Drucksensor 21 in Verbindung steht. Position C bedeutet, dass die Ausnehmung mit der zweiten Messausnehmung 16 der oberen Scheibe in Verbindung steht, bzw. dass die zugehörige Flasche mit dem Drucksensor 22 verbunden ist.

Position A: Hier wird aus der Flasche über eine konstante Zeit (z.B. 70 ms) Luft abgesaugt. Die Absaugung erfolgt von einer Vakuumpumpe 18, die für die nötige Volumenmenge pro Zeit ausgelegt wird (z.B. 0.3 L x 500 BPM = 150 L/min ) und ein Vakuum von ca. 95% erreichen kann. Das Konstanthalten der Absaugzeit wird durch ein direkt vor dem Absaugschlitz angebrachtes elektrisches Ventil 19 garantiert. Die Absaugzeit sollte nicht mehr als +/- 0.5 ms variieren. Die Vakuumpumpe kann sich, über einen längeren, dikken Schlauch mit dem Elektroventil verbunden, um unteren Teil der Maschine befinden.

Bei tiefen Geschwindigkeiten, als solange die Absaugzeit sich innerhalb der Durchlaufzeit der Ausnehmung der unteren Scheibe durch den Absaugschlitz befindet, wird in den Gut-Flaschen immer der gleiche Unterdruck aufgebaut (z.B. -200 mbar). Dieser konstante Arbeitspunkt bringt den Vorteil, dass die später beschriebenen Drucksensoren nur in einem bestimmten Druckbereich arbeiten müssen und dadurch eine hohe Auflösung erzielt werden kann, welche wiederum massgebend für die Genauigkeit der Messung ist. Bei Geschwindigkeiten, bei denen der Absaugschlitz die Absaugzeit begrenzt (z.B. >500 BPM) wird nicht mehr derselbe Unterdruck in der Flasche erreicht, wie bei den tieferen Geschwindigkeiten. Dies beeinträchtigt das Funktionieren der Leckmessvorrichtung jedoch nicht, da alle geschwindigkeitsabhängigen Einflüsse in der Steuereinrichtung 20 gespeichert sein können und somit bei der Auswertung berücksichtigt werden. Die Begrenzung der Zeit durch den Absaugschlitz kann dadurch sogar bewusst für die Schonung des Elektroventils genutzt werden, das dann immer geöffnet ist.

Die gespeicherten Daten können zumindest teilweise aus einem Lernbetrieb der Vorrichtung stammen, in welchem die benötigten Daten (Lerndaten für jeden Flaschentyp) ermittelt und gespeichert werden. Auch eine Erfassung oder Änderung oder Ergänzung der Daten im Normalbetrieb ist möglich.

Die optimale Absaugzeitdauer hängt vom Flaschentyp ab. Bei grossen, dünnwandigen Flaschen kann nicht so tief abgesaugt werden (z.B. bis max. -100 mbar) wie bei kleinen, dickwandigen Flaschen (z.B. bis max. -450 mbar), ohne dass die Flasche einknicken könnte. Bei grossen Flaschenvolumen wird jedoch automatisch nur ein geringerer Unterdruck wie bei kleinen Flaschen bei gleicher Saugzeit erreicht.

Flasche vor Position B: Da das Absaugen in sehr kurzer Zeit erfolgt bzw. erfolgen muss und dadurch zwangsläufig gewisse Oszillationen des Innendrucks und der Innentemperatur entstehen, muss eine gewisse Beruhigungszeit bis zur ersten Druckmessung abgewartet werden. Der Abstand vom Absaugschlitz zur ersten Messposition bzw. zur ersten Messausnehmung ist also auf die max. Maschinengeschwindigkeit und die erforderliche Beruhigungszeit ausgelegt.

Flasche in Position B: Wie oben beschrieben hat sich der Innendruck der Flasche vor dem ersten Messschlitz beruhigt. Dies könnte sich gerade nach Eintritt in den Messschlitz wieder ändern, wenn dessen Volumen und das Volumen des Durchganges bis zum Drucksensor nicht minimal gehalten würden. Die Drucksensoren sind deshalb vorzugsweise im Kopf integriert bzw. ragen in die Messausnehmung hinein. Der optimale Messzeitpunkt befindet sich gegen Ende des Messschlitzes.

Flasche zwischen Position B und C: Hier wirkt das Leck. Diese Wirkzeit bis zur nächsten Druckmessung ist um so länger, je langsamer die Maschine läuft. Die Maschine darf ganz allgemein auch stillstehen oder bremsen und beschleunigen während des Messvorganges. Nur bei extremen Beschleunigungen (z.B. 250 BPM/s) wird die Messung wesentlich beeinflusst. Grundsätzlich ist die Messempfindlichkeit bei grösserer Wirkzeit (stetig aber nicht linear) besser. Dies gilt aber nur unterhalb einer bestimmten Minimalgeschwindigkeit bzw. Maximalwirkzeit (z.B. 10 BPM bzw. ca. 40 Sekunden). Bei so grossen Zeiten kann das Systemleck des Kopfes wirken und erhöhte Streuungen unter den Gutflaschen bzw. kleineren Signalabstand zu den Leckflaschen bewirken. (Nach ca. 5 Minuten hat sich der Innendruck der Flasche durch das Systemleck wieder vollständig aufgebaut.)

Flasche in Position C: Der zweite Messschlitz ist analog zum ersten aufgebaut: hier wird nun der Druck in der Flasche erneut bestimmt, nachdem ein allfälliges Leck gewirkt hat. Auch hier liegt die optimale Position des Messzeitpunktes gegen Ende des Messschlitzes.

Die verwendeten Sensoren sind bei beiden Positionen dieselben und z.B. vom Typ 141PC05G des Herstellers Honeywell.

Auswertung: Für die Auswertung ist vorerst ein Lernbetrieb bzw. die Erstellung des Datensatzes für den entsprechenden Flaschentyp notwendig. Der Datensatz enthält die max. Druckdifferenzen der Gut-Flaschen in Funktion der verschiedenen Wirkzeiten und eine Toleranzangabe für den Ausschluss sowie weitere Einträge, die später beschrieben werden.

Der Lernbetrieb selbst ist einfach, da nur wenige Einträge (ca. 10) notwendig sind. Zwischen den Punkten wird bei der Auswertung linear interpoliert. Voraussetzung ist natürlich eine lernfähige Auswertschaltung bzw. eine entsprechende Programmierung derselben aufgrund der im Lernbetrieb erfassten Daten.

Beim Betrieb der Vorrichtung kann jeweils nach der zweiten Messung die Auswertung des Leckes beginnen.

Anhand der genauen Zeitmessungen der ersten und der zweiten Druckmessung kann die Wirkzeit bestimmt werden. Danach kann anhand des Datensatzes die max. zulässige Druckdifferenz für diese Wirkzeit bestimmt werden. Liegt die Differenz der beiden Druckmessungen (P1-P2) über dieser Schwelle, wird ein Auswurfkriterium gesetzt.

Weiter kann der absolute Druck P1 benutzt werden, um folgende Aussagen zu machen:

- Flasche trocken oder feucht
- Flasche geknickt
- Flaschenvolumen zu klein (auch aufgrund von viel Restwasser)
- Systemfehler (Pumpe, Zuführungen, Ventil) wenn P1 immer zu klein

Die typischen Druckwerte bei verschiedenen Geschwindigkeiten und entsprechende +/- Toleranzen für den Ausschuss sind ebenfalls im Datensatz enthalten. Dass die Maschine Bremsen und Beschleunigen kann, wird auch hier in der Auswertung vollumfänglich berücksichtigt.

Alle Auswurfschwellen können erstens von der Umgebungstemperatur und zweitens von der Temperatur der angesaugten Luft (Innentemperatur der Flasche) abhängig gemacht werden (ein Temperatursensor kann im Ansaugstutzen integriert werden). Dies kann dann nützlich sein, wenn die Zeitdauer vom Austritt der Flasche aus der Blasmaschine oder der Waschmaschine bis in den Eintritt zur Leckmessung stark schwankt. Für diese Temperaturmessungen werden nur zwei Temperatursensoren benötigt.

Flasche nach Position C: Damit die Flaschen nicht an der Mündungsstation haften bleiben und wieder mit sauberer Luft befüllt werden, kann nach dem zweiten Messschlitz ein Belüftungsschlitz mit Luftfilter implementiert werden.

Für eine kleine Streuung der Gut-Flaschen wird weiter bevorzugt, dass kurze, immer gleich lange Schläuche zu den Mündungsstationen verwendet werden, und dass die Schlauchführung zu den Mündungsstationen möglichst ohne kleine Radien erfolgt.

Für die Erkennung kleinster Kerben in der Mündungsfläche wird eine dünne Mündungsdichtung mit einer Härte von >90 Shore bevorzugt.

**Patentansprüche**

1. Vorrichtung zur Erkennung von Lecks bei Behältern, gekennzeichnet durch eine Karussellfördereinrichtung (1) für die Behälter (11, 12) und einen am Karussell angeordneten Kopf (4) mit einem mit dem Karussell mitdrehenden ersten Element (6) und einem feststehenden zweiten Element (5), in welchen Elementen Ausnehmungen (7-10, 14, 15, 16) angeordnet sind, die bei der Drehung des Karussells zeitweise übereinander zu liegen kdmmen, eine Einrichtung (25) zur luftdichten Verbindung einzelner Behälter mit einzelnen Ausnehmungen des drehenden Elementes, eine mit mindestens einer Ausnehmung (14) des feststehenden Elementes verbundene Saugpumpe (18) sowie mindestens zwei bei voneinander beabstandeten Ausnehmungen des feststehenden Elementes angeordnete Drucksensoren (21, 22), die durch das Übereinanderliegen von Ausnehmungen zeitweise mit den Behältern verbindbar sind, sowie eine auf die Signale der Drucksensoren ansprechende Auswerteinrichtung (20).

2. Vorrichtung nach Anspruch 1, dadurch gekennzeichnet, dass zwischen der Pumpe und der Ausnehmung ein steuerbares Ventil (19) angeordnet ist.

3. Vorrichtung nach Anspruch 1 oder 2, dadurch gekennzeichnet, dass die Drucksensoren in die zugehörigen Ausnehmungen hineinragen.

4. Vorrichtung nach einem der Ansprüche 1 bis 3, dadurch gekennzeichnet, dass die Auswerteinrichtung zur Ermittlung der Zeitpunkte der Absaugung, der ersten Druckmessung und der zweiten Druckmessung ausgestaltet ist.

5. Vorrichtung nach Anspruch 4, dadurch gekennzeichnet, dass die Auswerteinrichtung zur Ermittlung eines Lecks in Abhängigkeit der Druckmesswerte und der Zeitmesswerte ausgestaltet ist.

6. Vorrichtung nach Anspruch 5, dadurch gekennzeichnet, dass die Auswerteinrichtung zur Ermittlung des Lecks in einem Speicher gespeicherte flaschentypabhängige Daten heranzieht.

Fig. 1

Fig 2

Fig 3